# EUROPÄISCHE PATENTSCHRIFT

(11) **EP 0 698 479 B1**
(45) Veröffentlichungstag und Bekanntmachung des Hinweises auf die Patenterteilung: **22.04.1998**
(21) Anmeldenummer: 95109167.7
(22) Anmeldetag: 14.06.1995
(51) Int. Cl.: B29D 30/42, B29C 65/00

(54) **Spleissmaschine**
Splicing machine
Appareil de raccordement

(30) Priorität: 27.08.1994 DE 4430453
(43) Veröffentlichungstag der Anmeldung: 28.02.1996
(73) Patentinhaber: Karl Eugen Fischer GmbH Maschinenfabrik, D-96224 Burgkunstadt (DE)
(72) Erfinder: Hoffmann,Bernd, D-96224Burgkunstadt (DE)
(74) Vertreter: Matschkur, Lindner Blaumeier Patent- und Rechtsanwälte

(56) Entgegenhaltungen:
- EP-A- 0 070 429
- DE-A- 4 309 013
- US-A- 4 793 890
- US-A- 5 221 409

## Beschreibung

Die Erfindung betrifft eine Spleißmaschine, insbesondere zum stumpfen Spleißen von Cordbandstreifen aus Textilcord, mit einem Transportband zum Heranfördern der Vorderkante eines Streifens an die Hinterkante des gespleißten, auf einem Spleißtisch ruhenden Cordbandes, und mit einer Spleißeinheit mit zwei mit ihren an den Streifen ober- und unterseitig angreifenden Laufflächen übereinanderstehend angeordneten Kegelscheibenpaaren, die in einem horizontal verfahrbaren Spleißkopf vertikal zusammenfahrbar angeordnet sind, wobei ein parallel zur zur Bewegungsrichtung verlaufendes, am Spleißkopf vorlaufend angeordnetes Trennblech vorgesehen ist.

Das Stumpfspleißen mittels zweiter verzahnter, ineinandergreifender Kegelräder und einer Gegendruckwalze, zwischen denen die zu verspleißenden Kanten miteinander durch die Rotation der Kegelräder bei gleichzeitigem Aufbringen eines definierten Anpreßdrucks, was eine Materialverschiebung der Kanten zueinander bewirkt, verbunden werden, liefert nur unbefriedigende Ergebnisse im Hinblick auf die Spleißnaht bzw. den Verbindungsbereich der Streifen. Dies deshalb, da zum einen die beiden Kanten undefiniert und unausgerichtet zueinander liegen, so daß ein gleichmäßiges Spleißen, wie dies bei definiert beabstandeten Kanten der Fall wäre, nicht möglich ist. Zum anderen bewirkt die Rotation der mit ihren Verzahnungen ineinander greifenden Kegelrädern einen derartigen Materialverschub, daß die Kanten der zu verspleißenden Streifen sich ganz oder teilweise überlappen, was beim Stumpfspleißen gerade nicht auftreten soll. Derart mangelhafte Spleißnähte erfordern, sofern überhaupt noch möglich, eine aufwendige Nachbearbeitung, um den gestellten Anforderungen gerecht zu werden. Diese Probleme gelten insbesondere beim Stumpfspleißen von Textilcord, sie treten jedoch gleichermaßen auch beim Spleißen von Stahlcordbändern auf.

Aus der US 4 867 823 ist bereits eine Vorrichtung der eingangs genannten Art gemäß dem einleitenden Teil des Anspruchs 1, mit übereinander angeordneten Kegelscheibenpaaren bekannt geworden.

Der Erfindung liegt die Aufgabe zugrunde, eine Spleißmaschine zu schaffen, mit welcher ein definiertes und exaktes Spleißen bei gleichzeitiger Vermeidung von Überlappungen der Streifenkanten möglich ist.

Zur Lösung dieser Aufgabe ist bei einer Spleißmaschine der eingangs genannten Art erfindungsgemäß vorgesehen, daß am Spleißkopf der (zweiten) Spleißeinheit mit den übereinander angeordneten Kegelscheibenpaaren , die zum eigentlichen Verspleißen dienen, eine erste Spleißeinheit vorgeschaltet ist, durch die die Kanten der Streifen im wesentlichen parallel zueinander und in stumpfe Anlage aneinander ausgerichtet werden, und wobei die erste Spleißeinheit aus zwei Kegelrädern und einer Gegendruckwalze besteht, und das Trennblech vor der ersten Sprießeinheit zur Ausrichtung der Kanten angeordnet ist.

Die in ihrer eigentlichen Spleißarbeit nachteiligen Kegelräder der ersten Spleißeinheit dienen somit lediglich zur exakten Ausrichtung der Kanten durch Anlage an ein Trennblech, das eine Art Richtschiene darstellt, so daß durch die nachfolgende Spleißeinheit die definiert zueinander angeordneten Kanten exakt und ohne Überlappung verspleißt werden können. Da das Trennblech der ersten Spleißeinheit vorlaufend und erfindungsgemäß im Bereich der Gegendruckrolle mit dieser bewegbar derart angeordnet ist, daß das in Bewegungsrichtung hintere Ende des Trennblechs in zusammengefahrener Spleißstellung zwischen die oberen Kegelräder vorzugsweise bis angrenzend an den an den Streifen angreifenden Radflächenbereich eingreift, werden die Kantenbereiche der Streifen durch die rotierenden Kegelräder unter leichter Spannung bzw. Druck in Richtung des Trennblechs verschoben und an dieses angelegt, so daß sie nach entsprechender Weiterbewegung der ersten Spleißeinheit, wobei ja das Trennblech ebenfalls mit abgezogen wird, durch diese Spannung selbständig in Anlage aneinanderrutschen und anschließend verspleißt werden können.

Die erfindungsgemäßen zwei Spleißeinheiten dürfen dabei nicht mit den bei der US 4 867 823 vorgesehenen zwei Spleißeinheiten verwechselt werden, da bei der Anordnung nach dieser US-Patentschrift zwei identische Spleißeinheiten vorliegen, von denen die eine zum Verspleißen von Cordbandstreifen von der Mitte zum einen Ende, und die andere zum Verspleißen dieser Streifen von der Mitte zum anderen Ende dienen, wobei eine geringfügige Überlappung auftritt, um keinen Spalt in der Mitte übrig zu lassen. Die beiden Spleißeinheiten wirken aber nicht wie bei der Erfindung dahingehend zusammen, daß die erste Spleißeinheit zunächst die Cordbandstreifen aneinander annähert und ausrichtet, ohne ein Verspleißen zu bewirken, und daß erst die zweite Spleißeinheit, die noch dazu auch anders ausgebildet ist als die erste, das tatsächliche Verspleißen bewirkt.

Die Laufflächen der Kegelscheiben können in weiterer Ausgestaltung der Erfindung plan sein, wobei die Kegelscheiben derart angeordnet sind, daß die Laufflächen jedes Kegelscheibenpaares im am Material angreifenden Bereich eine Ebene bilden. Die Kegelscheiben weisen keine ineinandergreifende Verzahnung auf, sondern sind bis auf einen minimalen Abstand im an den Streifen angreifenden Bereich angrenzend aneinander angeordnet, so daß dem Material eine ausreichende Bewegungskomponente in Richtung aufeinander erteilt wird, jedoch die nachteilige Überlappung, die ja ursächlich mit der Wirkungsweise der Verzahnung der Kegelräder zusammenhängt, vorteilhaft vermieden wird. Da auch mittels der Kegelscheiben eine ausreichende Verschiebung der Streifenkanten in Richtung auf das Trennblech erreichbar ist, können anstelle der Kegelräder selbstverständlich auch in der ersten Spleißeinheit Kegelscheiben verwendet werden, da auch mit den Kegelscheiben die Streifenkanten in Anlage an das Trennblech geschoben werden können.

Um sowohl eine ausreichende Führung der Streifenkanten als auch eine ausreichende Stabilisierung der Kegelscheiben im Hinblick auf die aufzubringende Anpreßkraft zu gewährleisten, kann in weiterer Ausgestaltung der Erfindung vorgesehen sein, daß den jeweiligen Kegelscheibenpaaren der zweiten Spleißeinheit zwischen die Kegelscheiben vorzugsweise bis angrenzend an den an den Streifen angreifenden Laufflächenbereich eingreifende Stützelemente zugeordnet sind.

Um eine Bewegungssynchronisierung der Kegel- und Walzenelemente der Spleißeinheiten zu realisieren, kann ferner vorgesehen sein, daß jeweils die oberen und die unteren Elemente der Spleißeinheiten mittels je eines separaten Hub-Druck-Zylinders gemeinsam bewegbar sind. Der erforderliche Anpreßdruck wird damit über die einzelnen Hub-Druck-Zylinder gesteuert. Da jedoch die Kegelräder nicht so fest angedrückt werden sollten, wie die Kegelscheiben, da sonst die Vorspannung der an das Trennblech angelegten Streifenkanten derart groß wird, daß eine Überlappung nachfolgend der Fall sein kann, kann im Rahmen der Erfindung ferner eine Vorrichtung zur Regelung der den Streifen aufgebrachten Andruckkraft der Kegelräder der ersten Spleißeinheit vorgesehen sein, wobei diese Vorrichtung erfindungsgemäß durch eine spannbare Druckfeder, über welche die Kegelräder am Spleißkopf gelagert sind und die die Andruckkraft vorbestimmt, realisiert sein.

Da der durch die Kegelräder erwirkbare Verschub der Streifenkanten in Richtung des Trennblechs, das wenigstens in zwischen die Kegelräder angreifenden Bereich eine Schneide aufweist, nur begrenzt ist, die Kanten jedoch entweder durch einen fehlerhaften Zuschnitt oder durch die An- und Abförderung zueinander etwas weit beabstandet sein können, kann auf der Basis der Erfindung ferner eine dem Spleißkopf vorlaufende Vorrichtung zur primären Vorpositionierung der Kanten der Streifen bezüglich des Trennblechs vorgesehen sein, so daß die Kanten in eine von der ersten Spleißeinheit korrigierbare Stellung vorpositioniert werden. Dabei kann diese Vorrichtung bezüglich des Trennblechs schrägstehende Rollen umfassen, die beidseitig des Trennblechs am jeweiligen Streifen ober- und unterseitig, den jeweiligen Streifen zum Trennblech hin verschiebend angreifen, wobei wenigstens die oberseitig angreifenden Rollen mittels Hub-Druck-Zylinder vertikal bewegbar sind. Um zu vermeiden, daß auch eine Bewegung der Kanten im Rahmen der Vorpositionierung dann erfolgt, wenn diese bereits ausreichend bezüglich des Trennblechs angeordnet sind, kann in weiterer Ausgestaltung der Erfindung vorgesehen sein, daß der Vorrichtung Sensorelemente zur Erfassung der Lage der jeweiligen Streifenkante bezüglich des Trennblechs zugeordnet sind, wobei die Steuerung der Vorrichtung in Abhängigkeit der Sensorerfassung erfolgt, so daß die Vorpositionierung nur dann greift, wenn die Kanten tatsächlich entsprechend weit vom Trennblech beabstandet sind.

Sowohl zur Erzielung eines exakten Spleißergebnisses als auch zur Beschleunigung des eigentlichen Spleißvorganges hat es sich als zweckmäßig herausgestellt, wenn zwei im wesentlichen spiegelbildlich aufgebaute, längs einer gemeinsamen Achse unabhängig voneinander verfahrbare Spleißköpfe vorgesehen sind, so daß quasi jeder Spleißkopf, ausgehend von einer Null-Stellung der Spleißköpfe in der Streifenmitte, lediglich den halben Spleißweg zurücklegen muß, was bei gleichzeitigem Betrieb beider Spleißköpfe zu einer deutlichen Zeitersparnis führt.

Um neben der Lagekorrektur der Streifenkanten mittels der ersten Spleißeinheit bzw. der Vorpositioniervorrichtung bereits durch die Stellung des oder der Spleißköpfe bezüglich der Kante des gespleißten Cordbandes, die ja nicht parallel zur Momentanstellung der Bewegungsachse der Spleißköpfe verlaufen muß, sondern infolge mangelhaften Zuschnitts oder der Förderung unter einem Winkel dazu verlaufen kann, eine Grobausrichtung zueinander zu bewirken, kann im Rahmen der Erfindung ferner vorgesehen sein, daß der oder gegebenenfalls beide Spleißköpfe in einem gemeinsamen Drehpunkt horizontal schwenkbar bezüglich der auf dem Spleißtisch fixierten Kante des gespleißten Cordbandes gelagert sind, so daß je nach Winkellage der Kante bezüglich der Bewegungsachse diese nachkorrigiert werden kann. Durch ein vorgesehenes Sensorelement zur Erfassung der Stellung des oder gegebenenfalls der Spleißköpfe bezüglich der Lage der Kante kann damit diese Korrektur vollautomatisch derart durchgeführt werden, daß bei Nichterkennen der Kante eine sofortige, motorisch angetriebene Korrektur so lange erfolgt, bis das Sensorelement die Kante erfaßt.

Da sich beim Abziehen das gespleißte Cordband vertikal zur Förderrichtung verschieben kann, kann in weiterer Ausgestaltung eine Einrichtung zur Positionierung der Längskante des gespleißten Cordbandes bezüglich einer am Spleißtisch angeordneten Anschlagleiste, der wenigstens ein Sensorelement zur Erfassung der Längskante zugeordnet ist, vorgesehen sein. Diese Einrichtung kann ein in der Ebene des Spleißtisches angeordnetes, mit den Spleißköpfen verschwenkbares und das Cordband wenigstens im Kantenbereich tragendes umlaufendes Positionierband sein, das abhängig von der Erfassung des Sensors gesteuert ist und das das Cordband bei Betätigung wieder in Anlage an die Anschlagleiste rutscht.

Da auch bezüglich des herangeförderten Streifens diese Probleme auftreten können, können im Rahmen der Erfindung ferner dem anfördernden Transportband zugeordnete Einrichtungen, insbesondere Zangen zum Transport des Streifens bei gleichzeitiger Grobpositionierung der Kante des Streifens bezüglich der Kante des gespleißten Streifens und/oder des oder gegebenenfalls der Spleißköpfe vorgesehen sein, wobei auch hier Sensorelemente zur Erfassung der Position der Kante des zu spleißenden Streifens vorgesehen sein können. Die Steuerung des Transportbandes und/oder der Einrichtungen erfolgt auch hier in Abhängigkeit der Erfassung der Sensorelemente. Dabei haben sich als Sensorelemente optische Sensoren, insbesondere Lichtleiter als besonders zweckmäßig erwiesen.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: eine Prinzipdarstellung eines Spleißkopfes,
- Fig. 2: eine Ansicht der zweiten Spleißeinheit in Richtung des Pfeiles II in Fig. 1,
- Fig. 3: eine Aufsicht auf das untere Kegelscheibenpaar der zweiten Spleißeinheit in Richtung der Pfeile III aus Fig. 2,
- Fig. 4: eine Schnittansicht in Richtung der Pfeile IV - IV aus Fig. 3,
- Fig. 5: eine ausschnittsweise Aufsicht auf die Lage der Streifenkanten bezüglich des Trennblechs,
- Fig. 6: eine Prinzipdarstellung der Vorrichtung zur Vorpositionierung, und
- Fig. 7A-7I: den Förder- und Spleißablauf der Spleißmaschine.

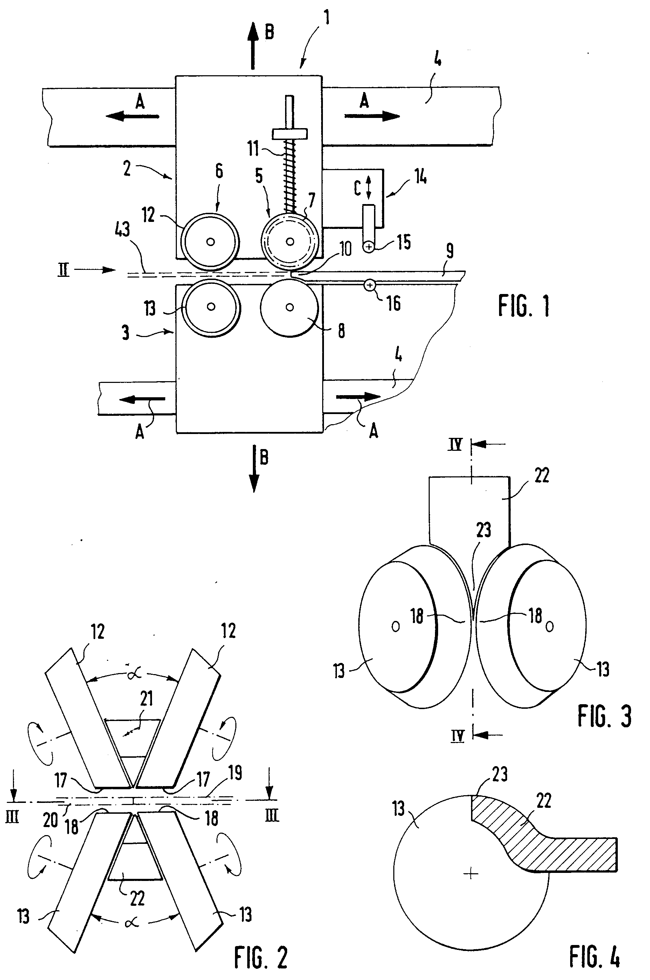

Fig. 1 zeigt einen Ausschnitt einer Spleißmaschine, mit einem Spleißkopf 1 bestehend aus einem Oberteil 2 und einem Unterteil 3, die beide synchron und gekoppelt miteinander horizontal in Richtung der Pfeile A auf lediglich stilisiert dargestellten Führungen 4 verfahrbar und vertikal in Richtung der Pfeile B auseinander- bzw. zusammenfahrbar sind. Der Spleißkopf 1, dem in der Spleißmaschine ein zweiter, links angeordneter und spiegelbildlich aufgebauter Spleißkopf nebengeschaltet ist, weist eine erste Spleißeinheit 5 und eine zweite Spleißeinheit 6 auf. Die erste Spleißeinheit 5 besteht aus am Oberteil 2 angeordneten Paar von Kegelrädern 7, die ebenso wie die in Fig. 2 gezeigten und später noch beschriebenen Kegelscheiben zueinander schrägstehend angeordnet sind, jedoch an ihren einander gegenüberstehenden Seiten eine ineinandergreifende Verzahnung aufweisen. Unterhalb der Kegelräder 7 ist eine Gegendruckwalze 8 angeordnet, die quasi als Widerlager für die die Ausrichtung der Kanten der Streifen bewirkenden Kegelräder 7 darstellt. Diese Kanten werden bezüglich eines dem Spleißkopf 1 vorlaufenden Trennblechs 9 ausgerichtet, das im Bereich der Gegendruckwalze 8 am unteren Teil 3 mit diesem bewegbar angeordnet ist. Das hintere Ende 10 des Trennblechs 9 reicht dabei bis angrenzend an den an den Streifen angreifenden Radflächenbereich zwischen die Kegelräder 7, so daß das Trennblech, das ja als Anlageblech dient, bis in den direkten Wirkungsbereich der Kegelräder 7 eingreift.

Das Oberteil 2 und das Unterteil 3 sind jeweils über separate, nicht dargestellte Hub-Druck-Zylinder vertikal bewegbar, wobei die über die Spleißeinheiten 5, 6 an den Streifen angreifende Andruckkraft durch die Hub-Druck-Zylinder bestimmt wird. Da jedoch die Spleißeinheit 5 lediglich der Ausrichtung, nicht jedoch dem Verspleißen dient, und da bei zu großer Andruckkraft und zu großem Verschub des Kantenmaterials an das Trennblech 9, was zu einer erhöhten Spannung dieses Materialbereichs führt, nachfolgend eine Überlappung auftritt, wenn die erste Spleißeinheit 5 und damit das Trennblech 9 und der Bereich 10, an den die Streifenkanten angelegt worden sind, aus diesem Bereich abgezogen ist, sind die Kegelräder 7 mittels einer spannbaren Druckfeder 11 am Spleißkopf 1 gelagert, so daß die Andruckskraft lediglich über die Vorspannung der Feder 11, nicht jedoch durch die tatsächlich mittels des Hub-Druck-Zylinders erwirkte Andruckskraft eingestellt wird. Anstelle der Druckfeder 11 könnte selbstverständlich auch ein separater Hub-Druck-Zylinder vorgesehen sein.

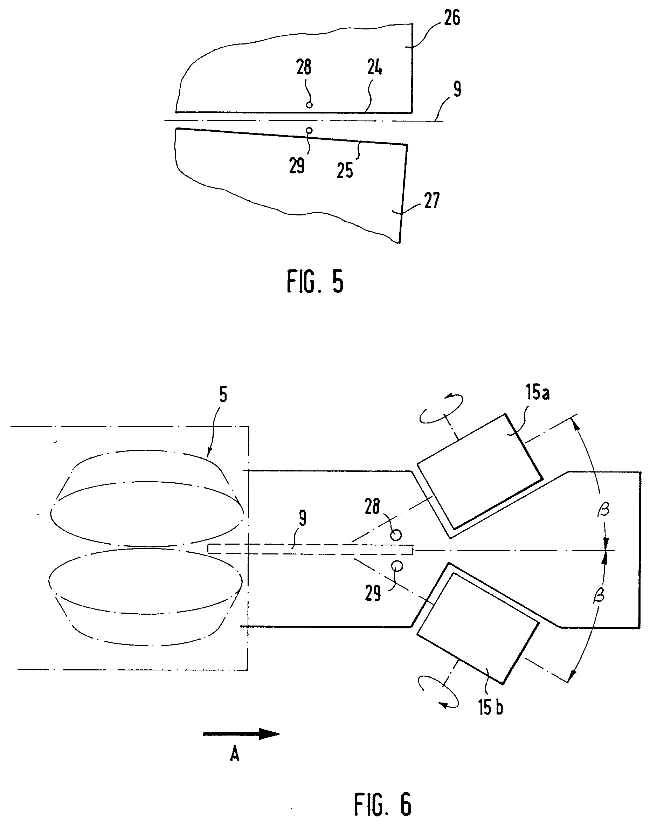

Die der ersten Spleißeinheit 5 nachgeschaltete zweite Spleißeinheit 6 besteht aus zwei Kegelscheibenpaaren 12, 13, wobei jeweils ein Paar am Ober- und Unterteil 2, 3 zur synchronen Betätigung mit den Elementen der ersten Spleißeinheit 5 angeordnet ist. Der konkrete Aufbau und die Wirkungsweise der zweiten Spleißeinheit 6 wird bezüglich Fig. 2 näher beschrieben. Ferner zeigt Fig. 1 die den Spleißeinheiten 5, 6 vorlaufende Vorrichtung 14 zur Grobpositionierung, bestehend aus oberen und unteren Rollen 15, 16, die an dem auf dem lediglich gestrichelt dargestellten Spleißtisch 43 ruhenden Streifen ober- und unterseitig angreifen. Die oberen Rollen 15, von denen je eine auf je einer Seite des Trennblechs 9 am jeweiligen Streifen angreift (vgl. Fig. 6) sind über einen weiteren Hub-Druck-Zylinder in Richtung des Pfeiles C heb- und senkbar, so daß sie wahlweise zuschaltbar sind.

Fig. 2 zeigt in einer Seitenaufsicht die Ausbildung und die Stellung der Kegelscheiben 12, 13 zueinander. Diese sind unter je einem Winkel α zueinanderstehend angeordnet, so daß ihre jeweiligen Laufflächen 17, 18 in dem Bereich, der an den lediglich gestrichelt und prinzipiell dargestellten Streifen 19, 20 angreift, in einer Ebene liegen. Beim Verspleißen, bei dem die Kegelscheiben 12, 13 mit definierter Andruckkraft an den Streifen 19, 20 angreifen, werden die Kanten der Streifen 19, 20 durch die Rotation der Kegelscheiben 12, 13 um ihre jeweiligen Drehachsen, im Rahmen welcher den Streifen 19, 20 eine Bewegungskomponente in Richtung aufeinander erteilt wird, zueinander hinverschoben und miteinander verspleißt. Da die Kegelscheiben 12, 13 mit ihren Laufflächen 17, 18 lediglich nebeneinander geordnet sind, jedoch nicht ineinander eingreifen, werden die mittels der Spleißeinheit 5 bereits in leichte Anlage aneinander gebrachten Kanten noch stärker zusammengepreßt, ohne jedoch zu überlappen. Um sowohl eine ausreichende Führung der Streifen 19, 20 im Bereich der Kegelscheiben 12, 13 zu gewährleisten, als auch zur Erhöhung der Stabilität der Kegelscheiben, auf die beim Verspleißen die gesamte Andruckkraft wirkt, ist jedem Kegelscheibenpaar ein Stabilisierungselement 21, 22 zugeordnet, dessen Stellung und Form den Fig. 3 und 4 zu entnehmen ist. Fig. 3 zeigt dabei eine Aufsicht auf das Kegelscheibenpaar 13. Das Stützelement 22 ist im vorderen Bereich 23 spitz zulaufend ausgebildet, so daß es mit seiner Oberseite bzw. -kante bis in den an den Streifen 19, 20 angreifenden Laufflächenbereich 18 eingreifen kann. Im gesamten Bereich, mit welchem das Stützelement 22 zwischen die Kegelscheiben 13 eingreift, ist es entsprechend der Kreisform der Kegelscheiben 13 ausgebildet, vgl. Fig. 4.

Fig. 5 zeigt in einer Aufsicht die Lage der Kanten 24, 25 zweier Streifen 26, 27 bezüglich des strichpunktiert dargestellten Trennblechs 9. Die Kante 24 ist dabei bereits weitestgehend parallel und in einem zulässigen, mittels der ersten Spleißeinheit 5 bearbeitbaren Abstand positioniert. Demgegenüber verläuft die Kante 25 zum Trennblech 9 unter einem Winkel und ist deutlich von diesem beabstandet. In diesem Fall setzt die Vorrichtung 14, die den Spleißeinheiten 5, 6 vorläuft, ein, um die schräg verlaufende Kante 25 bearbeitbar vorzupositionieren. Dabei ist die Wirkungsweise der Vorrichtung 14 derart, daß zunächst mittels zweier Sensorelemente 28, 29, die an der Vorrichtung 14 angeordnet sind, die Lage der Kante 24, 25 erfaßt wird. Wird hierbei ermittelt, daß eine oder beide Kanten fehlerhaft positioniert sind, so wird die entsprechende Rolle 15a bzw. 15b unabhängig voneinander mittels je eines nicht dargestellten Hub-Druck-Zylinders betätigt und auf den jeweiligen Streifen 26, 27 abgesenkt. Durch die jeweils unter einem Winkel β bezüglich des Trennblechs 9 angeordneten und sich durch die Bewegung des Spleißkopfes 1 in Richtung des Pfeiles A um ihre Achsen drehenden Rollen 15a, 15b wird dem jeweiligen Streifen 26, 27 eine Bewegungskomponente in Richtung auf das Trennblech 9 übertragen, so daß dieser auf das Blech 9 hin verrutscht wird. Dabei ist der Versatz derart, daß der jeweilige Streifen so weit auf das Trennblech 9 hingeschoben wird, daß sein Abstand zu diesem in einem von der nachlaufenden Spleißeinheit 5 bearbeitbaren Bereich liegt.

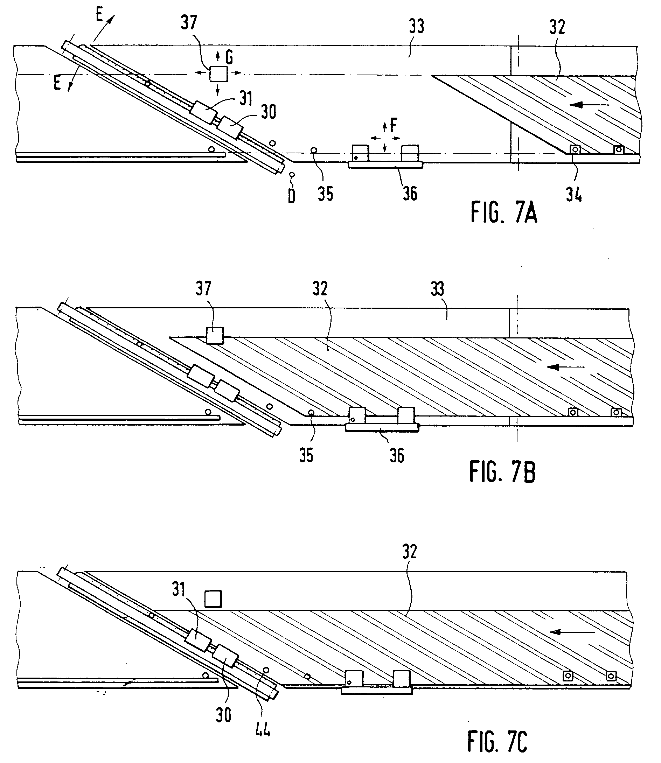

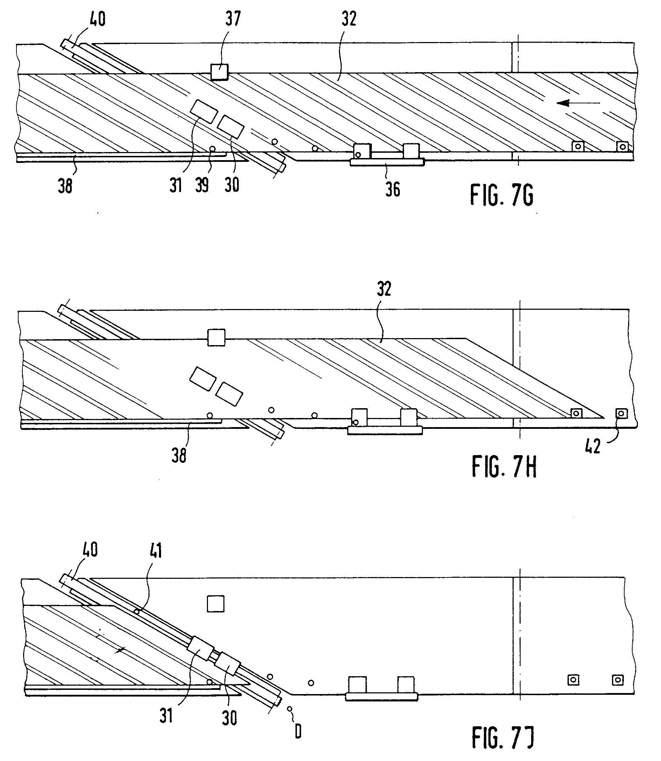

Die Fig. 7A bis 7I zeigen schematisch den Förder- und Spleißablauf der Spleißmaschine. Wie Fig. 7A zu entnehmen ist, besitzt die Spleißmaschine zwei Spleißköpfe 30, 31, die separat voneinander längs einer gemeinsamen Achse bewegbar sind. Beide Spleißköpfe 30, 31 sind gemeinsam in einem Drehpunkt D schwenkbar gelagert, so daß eine Ausrichtung der Spleißköpfe 30, 31 bezüglich der Kante des bereits gespleißten Cordbandes, sofern diese unter einem Winkel zur Bewegungsachse der Spleißköpfe 30, 31 verläuft, möglich ist (Pfeile E). In der in Fig. 7A gezeigten Ausgangsposition ist das jeweilige Unterteil der Spleißköpfe 30, 31 mit den Trennblechen in angehobener Stellung, die jeweiligen Oberteile mit den Kegelscheibenpaar und dem Kegelräderpaar sind ebenfalls in angehobener Stellung. Das den angeförderten Streifen 32 tragende Transportband 33 wird nach mittels eines Sensorelements 34 erfaßtem Durchlauf des Streifens 32 von einem Eil-Gang auf einen Schleich-Gang heruntergeschaltet. Gleichzeitig wird am Spleißtisch ein Luftkissen eingeschaltet.

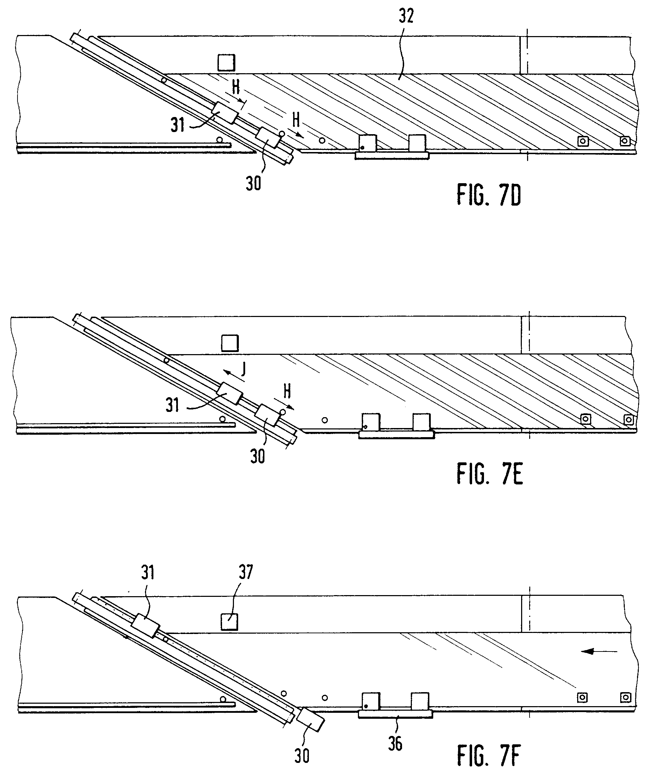

Der Streifen 32 wird so lange weitergefördert, bis er von einem Sensorelement 35 erkannt wird, wonach der Streifen von zwei ihn an seinen Längskanten klemmenden und führenden Zangen 36, 37, die, vgl. Fig. 7A, in Richtung der Pfeile F, G, verfahrbar sind, gegriffen und gegebenenfalls in Position gezogen wird (Fig. 7B). Mittels der Zangen 36, 37 wird der Streifen 32 so lange gefördert, bis er von einem Sensorelement 44 erfaßt wird, wonach die Zangen gestoppt werden. Die Vorderkante des Streifens 32 liegt nun benachbart an der Hinterkante des nicht dargestellten gespleißten Streifens. Das am Spleißtisch angelegte, den Streifen 32 tragende Luftkissen wird ausgeschaltet, gleichzeitig wird zur Fixierung des Streifens ein Vakuum angelegt. Anschließend wird das Oberteil des Spleißkopfs 30 abgesenkt, so daß sowohl das Oberteil als auch das Unterteil in Spleißstellung sind (Fig. 7C). Sodann fährt der Spleißkopf 30 in Richtung des Pfeils H und beginnt bereits mit dem Spleißvorgang. Synchron dazu verfährt der noch nicht in Spleißstellung befindliche Spleißkopf 31 ebenfalls in Richtung des Pfeils H um ein vorbestimmtes, dem Abstand der beiden Spleißköpfe 30, 31 entsprechendes Stück. Anschließend wird auch das Oberteil des Spleißkopfes 31 abgesenkt, so daß auch dieser in Spleißstellung ist (Fig. 7D). Der Spleißkopf 30 verfährt weiter in Richtung des Pfeiles H, der Spleißkopf 31 fährt nunmehr in entgegengesetzte Richtung (Pfeil I in Fig. 7E). Beide Spleißköpfe 30, 31 verfahren so lange, bis sie die in Fig. 7F gezeigte Endstellung erreicht haben. Die Oberteile beider Spleißköpfe werden nach oben, die Unterteile nach unten gefahren. Gleichzeitig werden die Zangen 36, 37 gelöst und das den Streifen 32 fixierende Vakuum ausgeschaltet. Zum Abtransport des nunmehr gespleißten Streifens wird am Spleißtisch wieder ein Luftkissen angelegt. Zu Beginn des Abtransports fahren die Spleißköpfe 30, 31 wieder in ihre Ausgangsposition (vgl. Fig. 7G). Fig. 7G ist ferner eine Anschlagleiste 38 zu entnehmen, der ein Sensor 39 zugeordnet ist. Sollte die Längskante des gespleißten Streifens sich während des Abtransports von der Anschlagleiste 38 entfernen, wird dies mittels des Sensors 39 erkannt, wonach der Streifen, spätestens wenn er seine in Fig. 7I gezeigte Endstellung erreicht hat, mittels eines synchron mit den Spleißköpfen 30, 31 verschwenkbaren, umlaufenden Positionierbandes 40, das am Streifen unterseitig angreift, entsprechend in Richtung der Anschlagleiste 38 verschoben wird. Wird das auslaufende Ende des gespleißten Streifens von einem Sensorelement 42 erkannt, werden die Transportbänder wieder vom Eil- auf den Schleich-Gang umgeschaltet (Fig. 7H). Befindet sich das Streifenende in der in Fig. 7I gezeigten Position, erfolgt zunächst eine Ausrichtung der Spleißköpfe 30, 31 und des Positionierbandes 40 durch Drehung um den Drehpunkt D bezüglich der Streifenkante, wobei die jeweilige Stellung mittels eines Sensors 41 erkannt wird. Gegebenenfalls wird der Streifen mittels des Positionierbandes 40 in Anschlag an die Anschlagleiste 38 gebracht. Anschließend fahren die jeweiligen Unterteile der Spleißköpfe 30, 31 nach oben, wonach zur Fixierung der Streifenkante ein Vakuum unterseitig angelegt wird und der Zyklus beginnend mit Fig. 7A von neuem beginnt.

## Patentansprüche

1. Spleißmaschine, insbesondere zum stumpfen Spleißen von Cordbandstreifen aus Textilcord, mit einem Transportband zum Heranfördern der Vorderkante eines Streifens an die Hinterkante des gespleißten, auf einem Spleißtisch ruhenden Cordbandes, und mit einer Spleißeinheit mit zwei mit ihren an den Streifen ober- und unterseitig angreifenden Laufflächen übereinanderstehend angeordneten Kegelscheibenpaaren, die in einem horizontal verfahrbaren Spleißkopf vertikal zusammenfahrbar angeordnet sind, wobei ein parallel zur Bewegungsrichtung verlaufendes, am Spleißkopf vorlaufend angeordnetes Trennblech vorgesehen ist, dadurch gekennzeichnet, daß am Spleißkopf (1) der Spleißeinheit (6) mit den übereinander angeordneten Kegelscheibenpaaren (12, 13), die zum eigentlichen Verspleißen dienen, eine erste Spleißeinheit (5) vorgeschaltelt ist, durch die die Kanten der Streifen (19, 20) im wesentlichen parallel zueinander und in stumpfe Anlage aneinander ausgerichtet werden, und wobei die erste Spleißeinheit (5) aus zwei Kegelrädern (7) und einer Gegendruckwalze (8) besteht, und das Trennblech (9) vor der ersten Spleißeinheit (5) zur Ausrichtung der Kanten angeordnet ist.

2. Spleißmaschine nach Anspruch 1, dadurch gekennzeichnet, daß die Laufflächen (17, 18) der Kegelscheiben (12, 13) plan sind, wobei die Kegelscheiben (12, 13) derart angeordnet sind, daß die Laufflächen (17, 18) jedes Kegelscheibenpaares (12, 13) im an den Streifen (19, 20) angreifenden Bereich eine Ebene bilden.

3. Spleißmaschine nach Anspruch 1 oder 2, gekennzeichnet durch den jeweiligen Kegelscheibenpaaren (12, 13) der zweiten Spleißeinheit (6) zugeordnete, zwischen die Kegelscheiben (12, 13) vorzugsweise bis angrenzend an den an den Streifen (19, 20) angreifenden Laufflächenbereich eingreifende Stützelemente (21, 22).

4. Spleißmaschine nach einem der Ansprüche 1 bis 3, dadurch gekennzeichnet, daß jeweils die oberen und die unteren Elemente (7, 8, 12, 13) der beiden Spleißeinheiten (5, 6) mittels je eines separaten Hub-Druck-Zylinders zur Synchronisierung der Bewegung gemeinsam bewegbar sind.

5. Spleißmaschine nach einem der vorangehenden Ansprüche, dadurch gekennzeichnet, daß das Trennblech (9) im Bereich der Gegendruckrolle (8) mit dieser bewegbar derart angeordnet ist, daß das in Bewegungsrichtung hintere Ende (10) des Trennblechs (9) in zusammengefahrener Spleißstellung zwischen die oberen Kegelräder (7) vorzugsweise bis angrenzend an den an den Streifen (19, 20) angreifenden Radflächenbereich eingreift.

6. Spleißmaschine nach Anspruch 5, dadurch gekennzeichnet, daß das Trennblech (9) wenigstens im zwischen die Kegelräder (7) eingreifenden Bereich (10) eine Schneide aufweist.

7. Spleißmaschine nach einem der vorangehenden Ansprüche, gekennzeichnet durch eine Vorrichtung zur Regelung der den Streifen (19, 20) aufgebrachten Andruckkraft der Kegelräder (7) der ersten Spleißeinheit (5).

8. Spleißmaschine nach Anspruch 7, dadurch gekennzeichnet, daß die Kegelräder (7) über eine spannbare Druckfeder (11) am Spleißkopf (1) gelagert sind.

9. Spleißmaschine nach einem der vorangehenden Ansprüche, gekennzeichnet durch eine dem Spleißkopf (1) vorlaufende Vorrichtung (14) zur primären Vorpositionierung der Kanten (24, 25) der Streifen (26, 27) bezüglich des Trennblechs (9).

10. Spleißmaschine nach Anspruch 9, dadurch gekennzeichnet, daß die Vorrichtung (14) bezüglich des Trennblechs (9) schrägstehende Rollen (15a, 15b, 16) umfaßt, die beidseitig des Trennblechs (9) am jeweiligen Streifen ober- und unterseitig, den jeweiligen Streifen zum Trennblech (9) hin verschiebend angreifen.

11. Spleißmaschine nach Anspruch 10, dadurch gekennzeichnet, daß wenigstens die oberseitig angreifenden Rollen (15a, 15b) mittels je eines Hub-Druck-Zylinders separat vertikal bewegbar sind.

12. Spleißmaschine nach einem der Ansprüche 9 bis 11, gekennzeichnet durch der Vorrichtung (14) zugeordnete Sensorelemente (28, 29) zur Erfassung der Lage der jeweiligen Streifenkante (24, 25) bezüglich des Trennblechs (9), wobei die Steuerung der Vorrichtung (14) in Abhängigkeit der Sensorerfassung erfolgt.

13. Spleißmaschine nach einem der vorangehenden Ansprüche, gekennzeichnet durch zwei im wesentlichen spiegelbildlich aufgebaute, längs einer gemeinsamen Achse unabhängig voneinander verfahrbare Spleißköpfe (30, 31).

14. Spleißmaschine nach einem der vorangehenden Ansprüche, dadurch gekennzeichnet, daß der oder gegebenenfalls beide Spleißköpfe (30, 31) in einem gemeinsamen Drehpunkt (D) horizontal schwenkbar (Pfeil E) bezüglich der auf dem Spleißtisch fixierten Kante des gespleißten Cordbandes gelagert sind.

15. Spleißmaschine nach Anspruch 14, gekennzeichnet durch wenigstens ein Sensorelement (41) zur Erfassung der Stellung des oder gegebenenfalls der Spleißköpfe (30, 31) bezüglich der Lage der Kante des gespleißten Cordbandes.

16. Spleißmaschine nach Anspruch 14 oder 15, gekennzeichnet durch eine Einrichtung zur Positionierung der Längskante des gespleißten Cordbandes bezüglich einer am Spleißtisch angeordneten Anschlagleiste (38), der wenigstens ein Sensorelement (39) zur Erfassung der Längskante zugeordnet ist.

17. Spleißmaschine nach Anspruch 16, dadurch gekennzeichnet, daß die Einrichtung ein in der Ebene des Spleißtisches angeordnetes, mit den Spleißköpfen (30, 31) verschwenkbares und das Cordband wenigstens im Kantenbereich tragendes umlaufendes Positionierband (40) ist, das abhängig von der Erfassung des Sensorelements (39) gesteuert ist.

18. Spleißmaschine nach einem der vorangehenden Ansprüche, gekennzeichnet durch dem anfördernden Transportband (33) zugeordnete Einrichtungen, insbesondere Zangen (36, 37) zum Transport des Streifens (32) bei gleichzeitiger Grobpositionierung der Kante des Streifens (32) bezüglich der Kante des gespleißten Streifens und/oder des oder gegebenenfalls der Spleißköpfe (30, 31).

19. Spleißmaschine nach Anspruch 18, gekennzeichnet durch Sensorelemente (34, 35, 44) zur Erfassung der Position der Kante des zu spleißenden Streifens (32), wobei die Steuerung des Transportbandes (33) und/oder der Einrichtungen (36, 37) in Abhängigkeit der Erfassung der Sensorelemente erfolgt (34, 35, 44).

20. Spleißmaschine nach einem der Ansprüche 12 bis 19, dadurch gekennzeichnet, daß die Sensorelemente (28, 29, 34, 35, 39, 41, 42, 44) optische Sensoren, insbesondere Lichtleiter sind.

## Claims

1. Splicing machine, in particular for the flush splicing of corded strips composed of textile cord, comprising a conveyor belt for feeding the front edge of the strip towards the rear edge of the spliced corded strip resting on a splicing table, and comprising a splicing unit having two conical disc pairs, which are disposed one over another with their running faces acting on the upper and lower faces of the strip and which are arranged so as to move vertically together in a horizontally displaceable splicing head, a separating plate being provided parallel to the direction of motion and being disposed in front of the splicing head, characterised in that in front of the splicing head (1) of the splicing unit (6) with the conical disc pairs (12, 13), which are disposed one over another and which are for splicing proper, a first splicing unit (5) is connected, by means of which the edges of the strip (19, 20) are aligned substantially parallel to one another and in flush abutment with one another, and wherein the first splicing unit (5) consists of two conical wheels (7) and a counter-pressure roller (8), and the separating plate (9) is disposed in front of the first splicing unit (5) for aligning the edges.

2. Splicing machine according to claim 1, characterised in that the running faces (17, 18) of the conical discs (12, 13) are plane, and the conical discs (12, 13) are so arranged that the running faces (17, 18) of each conical disc pair (12, 13) form a plane in the region acting on the strip (19, 20).

3. Splicing machine according to claim 1 or 2, characterised by support elements (21, 22) which are allocated to the respective conical disc pairs (12, 13) of the second splicing unit (6) and which engage between the conical discs (12, 13) preferably right up to the running face region acting on the strip (19, 20).

4. Splicing machine according to one of claims 1 to 3, characterised in that respectively the upper and lower elements (7, 8, 12, 13) of the two splicing units (5, 6) are movable together by means of a separate hydraulic pressure cylinder in order to synchronise the motion.

5. Splicing machine according to one of the preceding claims, characterised in that the separating plate (9) is disposed in the region of the counter-pressure roller (8) so as to move therewith, and in that the rear end (10) of the separating plate (9) in the direction of motion engages in the splicing position of being moved together between the upper conical wheels (7), preferably right up to the wheel surface region acting on the strip (19, 20).

6. Splicing machine according to claim 5, characterised in that the separating plate (9) has a blade at least in the region (10) engaging between the conical wheels (7).

7. Splicing machine according to one of the preceding claims, characterised by a device for controlling the contact pressure exerted on the strips (19, 20) by the conical wheels (7) of the first splicing unit (5).

8. Splicing machine according to claim 7, characterised in that the conical wheels (7) are mounted on the splicing head (1) via a loadable pressure spring (11).

9. Splicing machine according to one of the preceding claims, characterised by a device (14) upstream of the splicing head (1) for the primary pre-positioning of the edges (24, 25) of the strips (26, 27) with respect to the separating plate (9).

10. Splicing machine according to claim 9, characterised in that the device (14) with respect to the separating plate (9) comprises oblique rollers (15a, 15b, 16), which act on either side of the separating plate (9) on the upper and lower faces of the respective strip so as to push the respective strip up to the separating plate (9).

11. Splicing machine according to claim 10, characterised in that at least the rollers (15a, 15b) acting on the upper face are movable separately vertically by means of a respective hydraulic pressure cylinder.

12. Splicing machine according to one of claims 9 to 11, characterised by the sensor elements (28, 29) associated with the device (14) for detecting the position of the respective strip edge (24, 25) relative to the separating plate (9), the control of the device (14) being dependent on detection by the sensors.

13. Splicing machine according to one of the preceding claims, characterised by two splicing heads (30, 31) constructed substantially with mirror symmetry and movable independently apart along a common axis.

14. Splicing machine according to one of the preceding claims, characterised in that the splicing head or both heads (30, 31) if necessary are horizontally pivotable (arrow E) in a common fulcrum (D) with respect to the edge of the spliced corded strip fixed to the splicing table.

15. Splicing machine according to claim 14, characterised by at least one sensor element (41) for detecting the position of the splicing head or splicing heads (30, 31) with respect to the position of the edge of the spliced corded strip.

16. Splicing machine according to claim 14 or 15, characterised by a device for positioning the longitudinal edge of the spliced corded strip with respect to a stop bar (38), which is disposed on the splicing table and to which at least one sensor element (39) is allocated for detecting the longitudinal edge.

17. Splicing machine according to claim 16, characterised in that the device is a revolving positioning belt (40) which is disposed in the plane of the splicing table, is pivotable with the splicing heads (30, 31) and carries the corded strip at least in the edge region, the positioning belt (40) being controlled in accordance with the detection of the sensor element (39).

18. Splicing machine according to one of the preceding claims, characterised by devices, in particular pincers (36, 37), which are allocated to the supplying conveyor belt (33) and which are for the conveying of the strip (32) with simultaneous rough positioning of the edge of the strip (32) with respect to the edge of the spliced strip and/or of the splicing head or heads (30, 31).

19. Splicing machine according to claim 18, characterised by sensor elements (34, 35, 44) for detecting the position of the edge of the strip (32) to be spliced, wherein the control of the conveyor belt (33) and/or of the devices (36, 37) is effected in accordance with the detection of the sensor elements (34, 35, 44).

20. Splicing machine according to one of claims 12 to 19, characterised in that the sensor elements (28, 29, 34, 35, 39, 41, 42, 44) are optical sensors, in particular light conductors.

## Revendications

1. Machine de raccordement, notamment pour le raccordement en bout de nappes formées de bandes de câblés textiles, comportant une bande de transport servant à amener le bord avant d'une nappe contre le bord arrière de la bande de câblés raccordée, qui repose sur une table de raccordement, et comportant une unité de raccordement possédant deux couples de disques coniques, qui sont disposés l'un au-dessus de l'autre avec leurs surfaces de roulement qui s'appliquent sur les nappes, au niveau de leur face supérieure et de leur face inférieure, et qui sont montés, de manière à pouvoir être rapprochés verticalement, dans une tête de raccordement déplaçable horizontalement, et dans laquelle il est prévu une tôle de séparation qui s'étend parallèlement à la direction de déplacement et est disposée devant la tête de raccordement, caractérisée en ce que, sur la tête de raccordement (1), en amont de l'unité de raccordement (6) équipée des couples de disques coniques (12,13) disposés l'un au-dessus de l'autre, qui servent à réaliser le raccordement proprement dit, est montée une première unité de raccordement (5), par laquelle les bords des nappes (19,20) sont orientés sensiblement parallèlement l'un à l'autre et en étant appliqués en bout l'un contre l'autre, la première unité de raccordement (5) étant formée de deux roues coniques (7) et d'un cylindre de contre-pression (8), et la tôle de séparation (9) étant disposée devant la première unité de raccordement (5) pour l'alignement des bords.

2. Machine de raccordement selon la revendication 1, caractérisée en ce que les surfaces de roulement (17,18) des disques coniques (12,13) sont planes, les disques coniques (12,13) étant disposés de telle sorte que les surfaces de roulement (17,18) de chaque couple (12,13) de disques coniques définissent un plan dans la partie s'appliquant sur les nappes (19,20).

3. Machine de raccordement selon la revendication 1 ou 2, caractérisée par des éléments d'appui (21,22), qui sont associés aux couples de disques coniques respectifs (12, 13) de la seconde unité de raccordement (6) et s'engagent entre les disques coniques (12,13), de préférence jusque dans une position contiguë à la zone des surfaces de roulement, qui s'applique sur les nappes (19,20).

4. Machine de raccordement selon l'une des revendications 1 à 3, caractérisée en ce que les éléments supérieurs et les éléments inférieurs (7,8,12,13) des deux unités de raccordement (5,6) peuvent être respectivement déplacés en commun, chacun au moyen d'un vérin de levage et de pression respectif séparé, pour la synchronisation du déplacement.

5. Machine de raccordement selon l'une des revendications précédentes, caractérisée en ce que la tôle de séparation (9) est disposée dans la zone du rouleau de contre-pression (8) en étant déplaçable avec ce dernier de telle sorte que l'extrémité (10) de la table de séparation (9), qui est située en aval dans la direction de déplacement, s'engage, dans la position rapprochée de raccordement, entre les roues coniques supérieures (7), de préférence jusque dans une position contiguë à la zone des surfaces des roues, qui s'applique sur les nappes (19,20).

6. Machine de raccordement selon la revendication 5, caractérisée en ce que la tôle de séparation (9) possède un tranchant, au moins dans la zone (10) s'engageant entre les roues coniques (7).

7. Machine de raccordement selon l'une des revendications précédentes, caractérisée par un dispositif pour régler la pression de serrage, appliquée aux nappes (19,20), des roues coniques (7) de la première unité de raccordement (5).

8. Machine de raccordement selon la revendication 7, caractérisée en ce que les roues coniques (7) sont montées sur la tête de raccordement (1), par l'intermédiaire d'un ressort de pression (11) pouvant être bandé.

9. Machine de raccordement selon l'une des revendications précédentes, caractérisée par un dispositif (14), qui est situé devant la tête de raccordement (1) et sert à réaliser le prépositionnement primaire des bords (24,25) des nappes (26,27) par rapport à la tôle de séparation (9).

10. Machine de raccordement selon la revendication 9, caractérisée en ce que le dispositif (14) comprend des rouleaux (15a,15b,16), qui sont placés obliquement par rapport à la tôle de séparation (9) et qui s'appliquent, de part et d'autre de la tôle de séparation (9), sur la nappe respective, au niveau de la face supérieure et de la face inférieure de cette dernière, en déplaçant la nappe respective en direction de la tôle de séparation (9).

11. Machine de raccordement selon la revendication 10, caractérisée en ce qu'au moins les rouleaux (15a,15b), qui s'appliquent sur la face supérieure, peuvent être déplacés séparément en direction verticale au moyen de vérins de levage et de pression respectifs.

12. Machine de raccordement selon l'une des revendications 9 à 11, caractérisée par des éléments formant capteurs (28,29), qui sont associés au dispositif (14) et servent à détecter la position des bords respectifs (24,25) des nappes par rapport à la tôle de séparation (9), la commande du dispositif (14) s'effectuant alors en fonction de la détection réalisée par les capteurs.

13. Machine de raccordement selon l'une des revendications précédentes, caractérisée par deux têtes de raccordement (30,31), qui sont de constructions sensiblement symétriques et sont déplaçables indépendamment l'une de l'autre le long d'un axe commun.

14. Machine de raccordement selon l'une des revendications précédentes, caractérisée en ce que la ou, le cas échéant, les deux têtes de raccordement (30,31) sont montées de manière à pouvoir pivoter horizontalement (flèche E), autour d'un point commun de rotation (D), par rapport au bord, immobilisé sur la table de raccordement, de la bande de câblés raccordée.

15. Machine de raccordement selon la revendication 14, caractérisée par au moins un élément formant capteur (41) pour détecter la position de la ou, le cas échéant, des têtes de raccordement (30,31) par rapport à la position du bord de la bande de câblés raccordée.

16. Machine de raccordement selon la revendication 14 ou 15, caractérisée par un dispositif pour positionner le bord longitudinal de la bande de câblés raccordée, par rapport à une barrette de butée (38) disposée sur la table de raccordement et à laquelle est associé au moins un élément formant capteur (39) servant à détecter le bord longitudinal.

17. Machine de raccordement selon la revendication 16, caractérisée en ce que le dispositif est une bande circulante de positionnement (40), qui est disposée dans le plan de la table de raccordement, peut pivoter avec les têtes de raccordement (30,31) et porte la bande de câblés au moins dans la zone du bord, et qui est commandée en fonction de la détection réalisée par l'élément formant capteur (39).

18. Machine de raccordement selon l'une des revendications précédentes, caractérisée par des dispositifs qui sont associés à la bande de transport (33) réalisant l'entraînement, notamment des pinces (36,37), pour transporter la nappe (32) dans le cas d'un positionnement approximatif simultané du bord de la nappe (32) par rapport au bord de la nappe raccordée et/ou de la ou, le cas échéant, des têtes de raccordement (30,31).

19. Machine de raccordement selon la revendication 18, caractérisée par des éléments formant capteurs (34,35,44) pour détecter la position du bord de la nappe (32) devant être raccordée, la commande de la bande de transport (33) et/ou des dispositifs (36,37) s'effectuant alors en fonction de la détection réalisée par les éléments formant capteurs (34,35,44).

20. Machine de raccordement selon l'une des revendications 12 à 19, caractérisée en ce que les éléments formant capteurs (28,29,34,35,39,41,42,44) sont des capteurs optiques, notamment des guides de lumière.
